# EUROPEAN PATENT APPLICATION

(11) **EP 2 072 462 A1**
(43) Date of publication of application: **24.06.2009**
(21) Application number: 07829136.6
(22) Date of filing: 04.10.2007
(51) Int. Cl.: C01B 13/14, B01J 13/00, C01F 17/00, C01G 9/02

(54) **PROCESS FOR PRODUCING DISPERSION OF FINE METAL COMPOUND PARTICLES AND THE DISPERSION**

(30) Priority: 05.10.2006 JP 2006273647; 03.10.2007 JP 2007260044
(71) Applicant: National Institute Of Advanced Industrial Science, Tokyo 100-8921 (JP)
(72) Inventor: IZU, Noriya, Nagoya-shi, Aichi 463-8560 (JP); MATSUBARA, Ichiro, Nagoya-shi, Aichi 463-8560 (JP); ITOH, Toshio, Nagoya-shi, Aichi 463-8560 (JP); SHIN, Woosuck, Nagoya-shi, Aichi 463-8560 (JP)
(74) Representative: Galloway, Peter David
(86) International application number: PCT/JP2007/069397
(87) International publication number: WO 2008/041729

(57) **Abstract**

The present invention is to provide a process for producing a dispersion of fine core/shell type metal oxide particles and the dispersion thereby produced, the present invention are a process for producing a dispersion of fine core/shell type metal oxide particles comprising the steps of mixing a metal salt and a polymer in an organic solvent to obtain a mixture and heating this mixture under reflux at a prescribed temperature to precipitate metal oxide, wherein the metal salt is a nitrate salt or acetate salt and the particle diameter of the fine core/shell type metal oxide particles is adjusted using the molecular weight of the polymer, and a dispersion of fine core/shell type metal oxide particles obtained by the process, which does not undergo sedimentation even after standing for at least one day, and exhibits long-term stability, and a powder thereof.

## Description

### TECHNICAL FIELD

The present invention relates to a process for producing a dispersion of fine core/shell type metal oxide particles and to the dispersion thereby produced. More particularly, the present invention relates to a process for producing a dispersion of fine core/shell type metal oxide particles in order to produce a dispersion containing the fine core/shell type metal oxide particles and to products thereof, that can be used, for example, for catalysts, photonic crystals, gas sensors, chemical-mechanical polishes, ultraviolet blocking agents, and connecting pastes.

### BACKGROUND ART

Metal oxide microparticle-containing dispersions can be used in numerous fields, for example, catalysts, gas sensors, chemical-mechanical polishes, ultraviolet blocking agents, and connecting pastes. In the production of metal oxide microparticle-containing dispersions for the preceding applications, a stable dispersion cannot be obtained just by simply drying oxide microparticles or metal oxide microparticles and dispersing the microparticles in a dispersion medium by ordinary methods. The reason for this is that the production of a stable, metal oxide microparticle-containing dispersion requires the deaggregation of oxide microparticle aggregates or metal oxide microparticle aggregates once such aggregation has occurred, and this deaggregation is quite difficult.

Regardless of whether a gas-phase process or liquid-phase process is employed in the usual methods of nanoparticle synthesis, the synthesized nanoparticles typically undergo strong aggregation after their production unless their aggregation is inhibited. Once nanoparticles have undergone strong aggregation, it is generally quite difficult to break up the aggregation even by implementing a deaggregation process. A mechanical deaggregation technology using ceramic beads in a sand grinder mill has been disclosed in a prior art document (Patent Document 1) as a method of dispersing inorganic oxides, but the admixture of impurities is considered to be a problem here and the addition of a dispersing agent to the solvent is also required.

In view of the preceding, the acquisition of easily dispersible oxide microparticles and metal oxide microparticles can be envisioned if an aggregation-inhibiting treatment could be carried out prior to nanoparticle aggregation, that is, at the same time as nanoparticle production. When a dispersion medium containing polymer dissolved therein is used as the reaction milieu at this time, aggregation can be inhibited at the same time as metal oxide microparticle production and a metal oxide microparticle dispersion is obtained that as such exhibits long-term stability. Examples of the application of this concept to the sol-gel method and hydrolysis method (Non-patent Documents 1 to 4, Patent Document 2) have been reported. However, to date there have been no examples of the application of this concept to the reflux method.

For application as a photonic crystal, a metal oxide microparticle must be spherical and must have a uniform particle diameter (must be monodisperse). While prior art documents do disclose, respectively, a metal oxide ultramicroparticle and a method of producing same and also a metal oxide microparticle (Patent Documents 3 and 4), the aforementioned documents in no way describe a fine core/shell type metal oxide particle capable of photonic crystal applications and having a particle diameter of about 30 to 1000 nm, a small metal oxide particle diameter distribution (standard deviation on the particle diameter), a spherical shape for the metal oxide, and a good dispersibility in liquids, nor do these documents describe a dispersion of fine core/shell type metal oxide particles.

Patent Document 1: Japanese Patent Application Laid-open No. 2004-35632
Patent Document 2: Japanese Patent Application Laid-open No. H2-92810
Patent Document 3: Japanese Patent Application Laid-open No. H6-218276
Patent Document 4: Japanese Patent Application Laid-open No. 2006-8629
Non-patent Document 1: H. Yang, C. Huang, X. Su, Materials Letters, 60 (2006) 3714
Non-patent Document 2: Z. T. Zhang, B. Zhao, L. M. Hu, J. Solid State Chem., 121 (1996) 105
Non-patent Document 3: D. L. Tao, F. Wei, Mater. Lett., 58 (2004) 3226
Non-patent Document 4: G. C. Xi, Y. Y. Peng, L. Q. Xu, M. Zhang, W. C. Yu, Y. T. Qian, Inorg. Chem. Commun., 7 (2004) 607

In light of the circumstances outlined above and considering the prior art described hereabove, the present inventors carried out intensive and extensive investigations with the objective of developing a nanosize metal oxide microparticle-containing dispersion that maintains long-term stability due to an inhibition of nanoparticle aggregation. The following new knowledge was discovered as a result: the use of a reflux procedure accrues a number of advantages, e.g., an organic solvent can be used and a reaction initiator is not necessary, and enables the production of a fine core/shell type metal oxide particle-containing dispersion that resists nanoparticle aggregation. Additional investigations were performed and the present invention was achieved as a result of these additional investigations and the aforementioned discoveries.

### DISCLOSURE OF THE INVENTION

An object of the present invention is to provide, by applying the aforementioned concept to the reflux method, a process for producing a dispersion that enables the production of a fine core/shell type metal oxide particle-containing dispersion that exhibits long-term stability. A further object of the present invention is to provide this fine core/shell type metal oxide particle-containing dispersion.

The present invention comprises the following technical means in order to achieve the objects cited above.
(1) A process for producing a dispersion of fine core/shell type metal oxide particles comprising the steps of:
   mixing a metal salt and a polymer in a high-boiling organic solvent to obtain a mixture; and
   heating this mixture under reflux at a temperature of at least 110°C to precipitate metal oxide,
   wherein a layer of the polymer or a polymer related thereto is present on the surface of a secondary particle comprising a spherical aggregation of primary particles of the metal oxide.
(2) The process for producing a dispersion of fine core/shell type metal oxide particles according to (1), wherein the coefficient of variation in particle diameter of the fine core/shell type metal oxide particles is less than 0.25.
(3) A process for producing a dispersion of fine core/shell type metal oxide particles, comprising the steps of:
   removing an unreacted ion and the polymer present in the solvent of a dispersion obtained by the production process according to (1) or (2); and
   adding fresh solvent.
(4) The process for producing a dispersion of fine core/shell type metal oxide particles according to any of (1) to (3), wherein the dispersion of fine core/shell type metal oxide particles has a stability whereby no sedimentation is observed even after standing for at least one day.
(5) The process for producing a dispersion of fine core/shell type metal oxide particles according to any of (1) to (4), wherein the metal salt is a nitrate salt or an acetate salt.
(6) The process for producing a dispersion of fine core/shell type metal oxide particles according to any of (1) to (5), wherein the particle diameter of the metal oxide particles is made smaller by increasing the molecular weight of the polymer.
(7) The process for producing a dispersion of fine core/shell type metal oxide particles according to any of (1) to (6), wherein the concentration of the polymer (weight of polymer added per unit volume of the organic solvent) is from 80 kg/m³ to 120 kg/m³.
(8) The process for producing a dispersion of fine core/shell type metal oxide particles according to any of (1) to (7), wherein the polymer is polyvinylpyrrolidone or hydroxypropyl cellulose and the layer of the polymer or the polymer related thereto is not separated by washing.
(9) The process for producing a dispersion of fine core/shell type metal oxide particles according to any of (1) to (8), wherein the concentration of the metal salt is at least 0.05 kmol/m³.
(10) The process for producing a dispersion of fine core/shell type metal oxide particles according to any of (1) to (9), wherein the high-boiling organic solvent is the polyol ethylene glycol or diethylene glycol.
(11) The process for producing a dispersion of fine core/shell type metal oxide particles according to (5), wherein the nitrate salt or acetate salt is cerium nitrate or zinc acetate.
(12) The production process according to any of (1) to (11), wherein the fine core/shell type metal oxide particles have a particle diameter of 30 nm to 1000 nm.
(13) A dispersion of fine core/shell type metal oxide particles obtained by the production process according to any of (1) to (12), in which a polymer layer is present on the surface of a secondary particle comprising a spherical aggregation of primary particles of a metal oxide, wherein 1) the primary particles of the oxide are spherically aggregated, 2) a solid polymer layer is formed at the surface of the aggregated particle (secondary particle) by a crosslinking reaction, and 3) the fine core/shell type metal oxide particles are dispersed in a dispersion medium.
(14) A fine core/shell type metal oxide particle powder comprising a highly dispersible dry powder obtained by drying the dispersion of fine core/shell type metal oxide particles according to (13).

The present invention is described in additional detail in the following.
The fine core/shell type metal oxide particle encompassed by the present invention denotes a microparticle comprising a polymer layer present on the surface of a secondary particle that itself comprises the spherical aggregation of primary particles of metal oxide, and is distinct from a microparticle comprising a polymer present on the surface of a primary particle or present on the surface of a secondary particle that comprises an irregular aggregate of primary particles. A composite particle comprising a polymer compound coated on the surface of a primary particle or an aggregate is disclosed in Patent Document 4; however, this primary particle or aggregate is not spherical and has a nonuniform shape. This is due to the use in the production method disclosed in this document of a dispersing device, such as a bead mill, to disperse and grind already synthesized metal oxide microparticles.

Grinding occurs in this dispersion step into primary particles or into particles that are primary particle aggregates, and after grinding the primary particle aggregates cannot be spherical and cannot have a uniform size. In addition, this document also teaches a proportion of at least 25 weight% for the polymer coating, while in the present invention this is no more than 25 weight%, vide infra. This is because the easily freed polymer is removed by washing. This also represents a major difference from the document under consideration.

The present invention encompasses a process for producing a dispersion of fine core/shell type metal oxide particles, comprising the steps of mixing a metal salt and a polymer in a high-boiling organic solvent to obtain a mixture and heating this mixture under reflux at a prescribed temperature (at least 110°C) to precipitate metal oxide, wherein the metal salt is a nitrate salt or an acetate salt and the particle diameter of the metal oxide microparticles can be adjusted through the molecular weight of the polymer. The present invention additionally encompasses the dispersion of fine core/shell type metal oxide particles obtained by the above-mentioned production process, that does not undergo sedimentation even after standing for at least one day. The present invention further encompasses a highly dispersible dry powder that is a highly dispersible fine core/shell type metal oxide particle powder and that is obtained by drying the aforementioned dispersion of fine core/shell type metal oxide particles.

The dispersion of fine core/shell type metal oxide particles in the present invention refers to a dispersion of the fine core/shell type metal oxide particle (the dispersed material) in a dispersion medium, and may also be called a fine core/shell type metal oxide particle suspension, a fine core/shell type metal oxide particle sol, or a fine core/shell type metal oxide suspension. It may also be referred to as a fine core/shell type metal oxide particle paste when the viscosity is high. The process for producing a dispersion of fine core/shell type metal oxide particles of the present invention will be described first. The starting materials are metal salt, organic solvent, and a polymer. The metal salt can be exemplified by nitrate salts and acetate salts, and may be acquired commercially and is ordinarily a hydrate.

The nitrate salt is a metal nitrate salt and suitable examples are cerium nitrate, zirconium nitrate, aluminum nitrate, and magnesium nitrate. Suitable examples of the acetate salt are zinc acetate and cobalt acetate. The organic solvent must be a high-boiling organic solvent and can be exemplified by polyols. This polyol denotes a polyhydric alcohol and can be exemplified by ethylene glycol (EG), diethylene glycol, glycerol, and so forth, wherein ethylene glycol and diethylene glycol are more preferred.

In addition, the polymer is preferably soluble in the organic solvent and can be exemplified by polyvinylpyrrolidone (PVP), hydroxypropyl cellulose (HPC), polyethylene glycol (PEG), and so forth, wherein polyvinylpyrrolidone (PVP) is more preferred. However, the present invention is not limited to the preceding, and polymers having equivalent properties to the preceding and similar polymers having similar properties to the preceding may both be similarly used.

These starting materials are mixed and dissolved. This is the step of mixing a metal salt and a polymer in a high-boiling organic solvent to obtain a mixture. The metal salt concentration at this point is preferably at least 0.05 kmol/m³. Such a concentration is used in order to increase the proportion of the metal oxide present in the resulting dispersion and thereby bring about an increase in the productivity. The polymer concentration is preferably from 80 kg/m³ to 120 kg/m³.

This polymer concentration is defined as the weight of the added polymer per unit volume of the solvent. The reasons for this 80 kg/m³ to 120 kg/m³ range for the polymer concentration are as follows: at much below this range, the metal oxide microparticles readily aggregate, which is due to the failure of core/shell type metal oxide to be produced, the production of aggregated microparticles, or the production of poorly dispersible particles; at much above this range, the metal oxide nucleation reaction does not proceed.

The aforementioned mixture is heated under reflux at from 110°C to 200°C. This is the step of heating under reflux at a prescribed temperature to precipitate metal oxide. A base, such as sodium hydroxide or ammonia, is typically added when the precipitation of a metal oxide is sought; however, a characteristic feature of the present invention is that the addition of base is not required. The addition of, for example, sodium hydroxide, runs the risk of the admixture of, for example, sodium in the ultimately obtained nanoparticles. The admixture of such impurities is impossible in the present invention since the addition of base is not required.

The heating/refluxing period is from about 10 minutes to 120 minutes. Large amounts of unreacted metal ion may remain at shorter heating/refluxing times, while the secondary particles may undergo grain growth at times that are much longer. Due to these considerations, heating/refluxing times of about 10 minutes to 120 minutes are preferred. The turbidity of the mixture increases during this heating under reflux. Cooling is carried out after heating under reflux for the prescribed period of time. Proceeding in the described manner produces a dispersion of fine core/shell type metal oxide particles comprising fine core/shell type metal oxide particles dispersed in an organic solvent in which polymer has been dissolved.

The following is believed to be the mechanism by which the fine core/shell type metal oxide particles are produced.
1. Primary particles of oxide nucleate in the high-boiling organic solvent (polyol) in which polymer is homogeneously dissolved.
2. The primary particles spherically aggregate. Primary particle nucleation also continues without interruption at this point.
3. Nucleated primary particles collect on the surface of the aggregated particles (secondary particles).
4. At this point, the oxide acts as a catalyst at the surface of the secondary particle and the polymer and/or organic solvent undergo a crosslinking reaction to form a solid polymer layer.
5. Once the solid polymer layer has undergone sufficient growth, aggregation can no longer occur, yielding the fine core/shell type metal oxide particle.

The fine core/shell type metal oxide particle in the present invention has the following characteristic features: 1) the primary oxide particles undergo spherical aggregation, and 2) a solid polymer layer is formed at the surface of this aggregation particle (secondary particle) by a crosslinking reaction.

Heat is thought to be necessary for the oxide to exhibit catalytic activity, and it is for this reason that heating under reflux at a temperature of at least 110°C is necessary. In the case of a lower heating/refluxing temperature, the core-shell configuration is not achieved even if primary particles are produced. The fine core/shell type metal oxide particle according to the present invention does not appear unless the primary particles undergo aggregation. In this case, due to the presence of large amounts of unreacted polymer, solvent removal by, for example, an evaporator, yields an oxide/polymer composite composition in which the primary particles have been left behind in a polymer matrix; this is clearly different from the fine core/shell type metal oxide particle.

In addition, even when aggregation is produced, a catalytic reaction does not occur at the oxide surface and as a consequence the solid polymer layer cannot be formed and the result is an aggregated particle with a nonuniform morphology. The previously mentioned metal oxide/polymer composite composition is disclosed in Patent Document 3. This is essentially different from the present invention. As is shown in the examples provided below, fine core/shell type metal oxide particles are not formed when the heating/refluxing temperature is below a certain critical temperature, and as a consequence heating under reflux at a high temperature is essential in the present invention.

The particle diameter of the resulting fine core/shell type metal oxide particle can be controlled or adjusted at this point by changing the molecular weight of the polymer. The particle diameter of the fine core/shell type metal oxide particle declines as the molecular weight increases within the range of 4,000 to 20,000 for the average molecular weight as polyethylene glycol of the polymer as determined by gel permeation chromatography. In the present invention, the correlation between the molecular weight of the polymer and the particle diameter of the microparticle can be determined in advance, and this can be used to prepare a dispersion containing metal oxide microparticles with a desired particle diameter.

The dispersion medium is the organic solvent used for heating under reflux in the case of the dispersion of fine core/shell type metal oxide particles that is obtained immediately after the aforementioned heating under reflux. Thus, the dispersion medium is ethylene glycol (EG) when the heating under reflux has been run in ethylene glycol (EG). The dispersion medium may be exchanged when it is desired to change the dispersion medium to some other dispersion medium. For example, the dispersion medium can be exchanged by removing the dispersion medium by separating the dispersion medium from the dispersed material by, for example, centrifugal separation, and then adding the desired dispersion medium.

It is thought that the polymer used during the heating under reflux remains in the dispersion medium, as does unreacted metal ion. In view of this, the excess polymer and so forth can be removed by repeating centrifugal separation on the dispersion medium and solvent exchange. During this process, the polymer comprising the shell portion cannot be separated by washing and is indivisible from the core. The particle diameter of the metal oxide microparticle in the dispersion medium can be determined by dynamic light scattering (DLS). This metal oxide microparticle diameter is typically different from the particle diameter observed by, for example, scanning electron microscopy (SEM).

The reason for this is that the particles frequently undergo additional aggregation in the dispersion medium, in which case the diameters of the aggregated particles are observed as a result. The DLS procedure requires the refractive index of the dispersion medium and the viscosity of the dispersion medium. Literature values can be used for the refractive index of the dispersion medium. The viscosity of the dispersion medium can be taken to be the same as the viscosity of the dispersion, and the viscosity of the dispersion can be measured and this value can be used. Proceeding in this manner, the average particle diameter d_{average} and standard deviation s are determined and the coefficient of variation c = s/d_{average} is then calculated.

A powder can be obtained by subjecting the fine core/shell type metal oxide particle-containing dispersion obtained by the process described above to separation, for example, using centrifugal separation, in order to effect separation from the dispersion medium, followed by drying. As a general matter, a dry powder of metal oxide microparticles is refractory to redispersion in solvent, but the fine core/shell type metal oxide particle powder under consideration can be easily redispersed in a freely selected solvent. This is thought to be due to the presence of the polymer layer in the shell region of the fine core/shell type metal oxide particle powder, which results in an improved dispersibility.

A photonic crystal starting material is obtained when the metal oxide microparticle that is the core is spherical and monodisperse. In addition, even when the shell region is removed by a heat treatment, the primary particles of the core region do not become disarranged and the spherical secondary particle can be maintained.

While there have previously been various attempts, using a variety of nanoparticle synthesis methods, at the production of dispersions of nanosize oxide particles, the acquisition of stable dispersions of these oxide particles has been quite problematic due to the aggregation of the nanoparticles after their production. In contrast to this, the present invention can produce and provide a dispersion of fine core/shell type metal oxide particles that exhibits long-term stability. The present invention achieves this by using a reflux procedure in which metal oxide is precipitated by heating under reflux at high temperatures and by carrying out a starting material mixing step and a metal oxide microparticle precipitation step using a specific metal salt and a specific polymer. This results in the execution of a treatment that inhibits nanoparticle aggregation, i.e., the formation of a core-shell structure, at the same time as nanoparticle production.

The present invention additionally provides a fine core/shell type metal oxide particle that is spherical and of uniform size, wherein polymer forms the shell and the metal oxide microparticle that is the core is also spherical and of uniform size. The use of cerium nitrate yields a cerium oxide microparticle dispersion, while the use of zinc acetate yields a zinc oxide microparticle dispersion.

The present invention accrues the following effects.
(1) A metal oxide microparticle-containing dispersion having a long-term stability can be obtained.
(2) The core/shell type metal oxide in the dispersion has a small particle diameter of 30 nm to 1000 nm.
(3) The dispersion of fine core/shell type metal oxide particles can be produced by a convenient procedure.
(4) A freely selected metal nitrate salt or acetate salt can be used.
(5) The metal oxide microparticle-containing dispersion of the present invention is applicable to, for example, catalysts, photonic crystals, gas sensors, chemical-mechanical polishes, ultraviolet blocking agents, and connecting pastes.
(6) The present invention can provide a nanoparticle aggregation-inhibited, fine core/shell type metal oxide particle powder that can be redispersed in solvent.
(7) The present invention enables the average particle diameter of the produced microparticle to be freely adjusted by changing the molecular weight of the polymer that is added to the production of the microparticle dispersion.
(8) A high-concentration microparticle dispersion is obtained.
(9) A spherical metal oxide microparticle can be obtained by baking.
(10) The spherical metal oxide microparticle can be a starting material for photonic crystals.

### BRIEF DESCRIPTION OF THE DRAWINGS

Figure 1 shows an SEM image of sample 1-2;
Figure 2 shows an SEM image of sample 1-3;
Figure 3 shows an SEM image of sample 2-2;
Figure 4 shows an SEM image of sample 2-3;
Figure 5 shows an SEM image of sample 2-4;
Figure 6 shows an SEM image of sample 2-5;
Figure 7 shows an SEM image of sample 2-6;
Figure 8 shows the TEM image for the powder from sample 2-2 and the TEM image for a powder prepared using the same conditions as for sample 2-2 with regard to cerium nitrate and PVP concentration, but using a different volume of ethylene glycol (the black core region is oxide comprising a spherical aggregation of primary particles; the surrounding light gray shell region is the polymer layer);
Figure 9 shows a high-magnification TEM image for the powder from sample 2-2 and for a powder prepared using the same conditions as for sample 2-2 with regard to cerium nitrate and PVP concentration, but using a different volume of ethylene glycol (the cerium oxide primary particles have undergone high-density aggregation);
Figure 10 shows an SEM image of the zinc oxide microparticles obtained in Example 6;
Figure 11 shows the results of measurement on sample 8-1 using an ultraviolet-visible-near infrared microspectrophotometer; and
Figure 12 shows the SEM image of sample 9-1, which comprised the cerium oxide microparticles (only the secondary particles) of just the core region.

### BEST MODE FOR CARRYING OUT THE INVENTION

The present invention is specifically described based on the examples provided below, but the present invention is in no way limited by these examples.

### Example 1

PVP (Sigma-Aldrich, average molecular weight of 10,000 for the catalogue value and 4,350 (as polyethylene glycol) for the analytical value yielded by gel permeation chromatography (GPC)) and Ce(NO₃)₃ · 6H₂O (Kojundo Chemical Laboratory Co., Ltd.) were added to 30 cm³ EG (Wako Pure Chemical Industries, Ltd.) and stirred. The concentration of the added PVP was set at from 16 kg/m³ to 160 kg/m³. The Ce(NO₃)₃ · 6H₂O concentration was set at 0.400 kmol/m³.

The mixture was heated and then heating under reflux was carried out for 10 to 20 minutes at 190°C. However, in the case of sample 1-4, the reaction indicated below did not occur even when the heating/refluxing time was extended to 120 minutes. In the case of samples 1-1, 1-2, and 1-3, a light brown gas was produced during heating under reflux, after which the solution assumed a white turbidity. Heating under reflux for the prescribed period of time yielded a turbid white mixed solution (the dispersion). A portion of this turbid white solution was then subjected to centrifugal separation at from 3,000 rpm to 10,000 rpm in order to remove unreacted materials and the excess PVP and washing with water and ethanol was carried out. After the ethanol wash, drying at 80°C yielded a powder. The experimental conditions and results are shown in Table 1.

The particle diameter distribution of the dispersion was investigated by the DLS method. The viscosity and refractive index of the solvent are required for a determination of the particle diameter by the DLS method. The viscosity of the dispersion was determined using a B-type viscometer and this was used as the viscosity of the solvent. The B-type viscometer had a cone and plate geometry. The value (1.429) for ethylene glycol (EG) was used for the refractive index. The average particle diameter was determined by cumulant analysis. The powder dried at 80°C was characterized by X-ray diffraction (XRD) and SEM. The long-term stability of the dispersion was investigated by introducing the sample into a container and allowing the sample to stand.

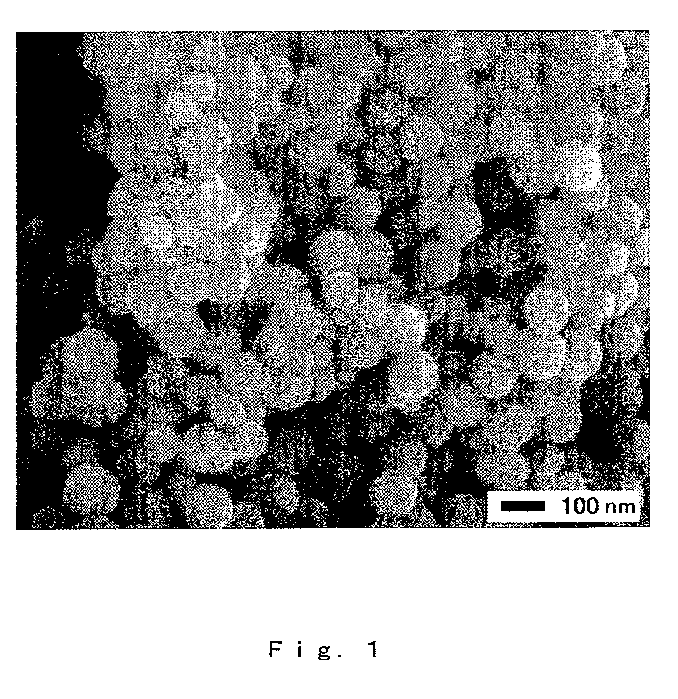

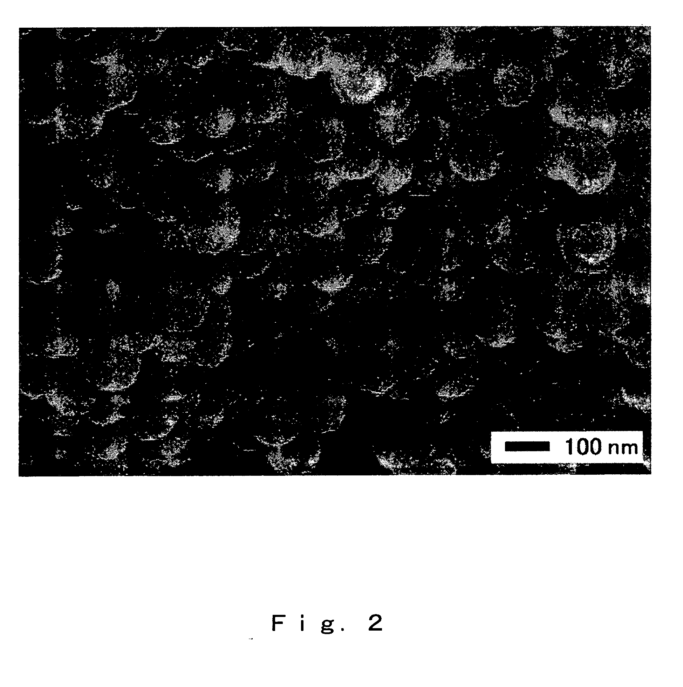

As previously noted, in the case of sample 1-4 white turbidity was not produced and a dispersion was not obtained. The product was cerium oxide for samples 1-1, 1-2, and 1-3.
For sample 1-1, the average particle diameter of the dispersed material was large at 1,330 nm, which was also supported by the SEM results; in addition, sedimentation occurred rapidly with this sample. In contrast, the average particle diameter of the dispersed material was approximately 110 nm for samples 1-2 and 1-3. SEM photographs of samples 1-2 and 1-3 are shown in Figures 1 and 2, respectively. Spherical microparticles with a particle diameter of approximately 110 nm were observed, and this average particle diameter agreed with that determined by DLS.

These results demonstrated that spherical core/shell type cerium oxide microparticles with a particle diameter of 110 nm were independently dispersed in the dispersion. It was also shown that a stable dispersion was not obtained at a low PVP concentration and that a reaction did not occur at a high PVP concentration, which thus demonstrated that there is an optimal PVP concentration for obtaining a stable cerium oxide microparticle dispersion. Based on this example, a PVP concentration from 80 kg/m³ to 105.6 kg/m³ was shown to be satisfactory in this regard. In addition, it was shown in the following example that a PVP concentration of 120 kg/m³ is also sufficient for obtaining a stable cerium oxide microparticle dispersion.

**Table 1.**

| sample no. | PVP concentration | dispersion | | powder | |
|---|---|---|---|---|---|
| | | average particle diameter by DLS | stability | product | micro-particle shape by SEM obser vation |
| | (kg/m³) | (nm) | | | |
| 1-1 Comp. Ex. | 16 | 1330 | rapid sedimentation | CeO₂ | aggregated particles |
| 1-2 | 80 | 114 | no separation after at least 60 days | CeO₂ | spherical |
| 1-3 | 105.6 | 112 | no separation after at least 60 days | CeO₂ | spherical |
| 1-4 Comp. Ex. | 160 | | | | |

### Example 2

PVP having different average molecular weights was added to 30 cm³ EG (Wako Pure Chemical Industries, Ltd.) with stirring. The catalogue value and the analytical value (by GPC, as polyethylene glycol) for the average molecular weight of the PVP are shown in Table 2. The average molecular weight of the PVP by GPC analysis was increased in the sequence from A to F. The concentration of the added PVP was set at 120 kg/m³. The Ce(NO₃)₃ · 6H₂O concentration was set at 0.600 kmol/m³. The mixture was heated and then heated under reflux for 10 to 30 minutes at 190°C.

For all the samples shown in Table 3, a light brown gas was produced during heating under reflux, after which the solution assumed a white turbidity. A turbid white mixed solution (the dispersion) was obtained after heating/refluxing for the prescribed period of time. Dilutions were also prepared by diluting the dispersion 10X with ethylene glycol (EG). A portion of the turbid white solution was then subjected to centrifugal separation at from 3,000 rpm to 10,000 rpm in order to remove unreacted materials and the excess PVP and washing with water and ethanol was carried out. After the ethanol wash, drying at 80°C yielded a powder.

The average particle diameter, viscosity, and long-term stability of the dispersion were evaluated by the same methods as described in Example 1. The coefficient of variation c was calculated from c = s/d where d is the average particle diameter and s is the standard deviation determined by DLS with histogram analysis by the Contin method. The particle shape, average particle diameter, and coefficient of variation c were determined for the powder from the results of SEM observation. Product identification was carried out by the same methods as in Example 1. The average value of the particle diameters of at least 90 microparticles appearing on the SEM photograph was used as the average particle diameter d. The coefficient of variation c was calculated from c = s/d where the standard deviation s was obtained by determining the particle diameter distribution and determining the standard deviation s thereon. The product was also examined by XRD.

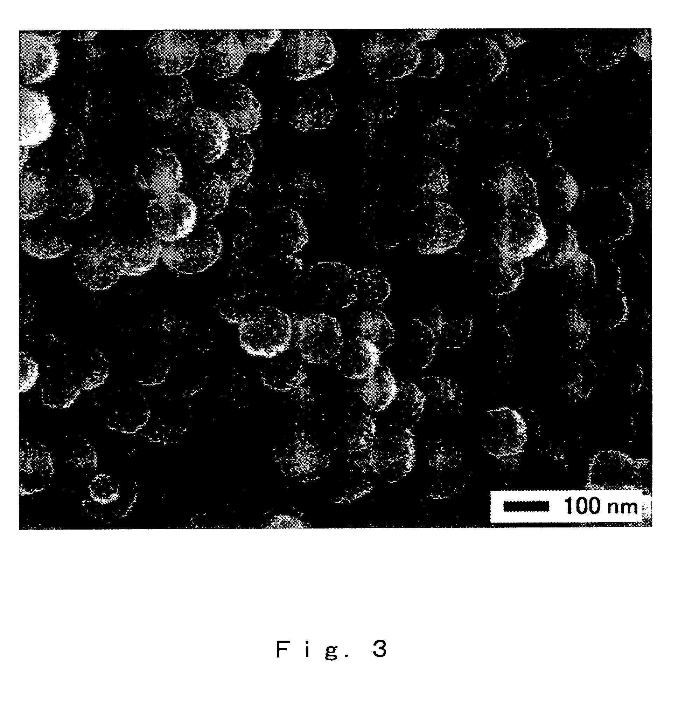

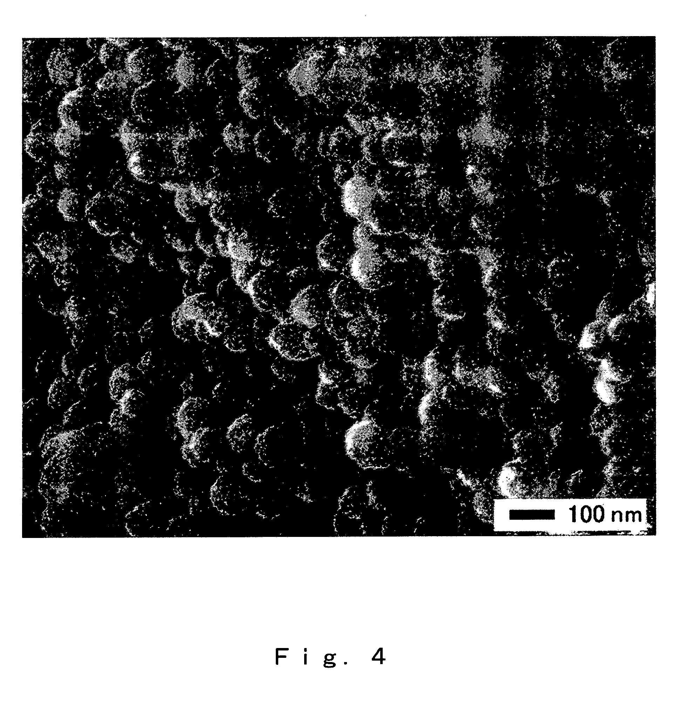

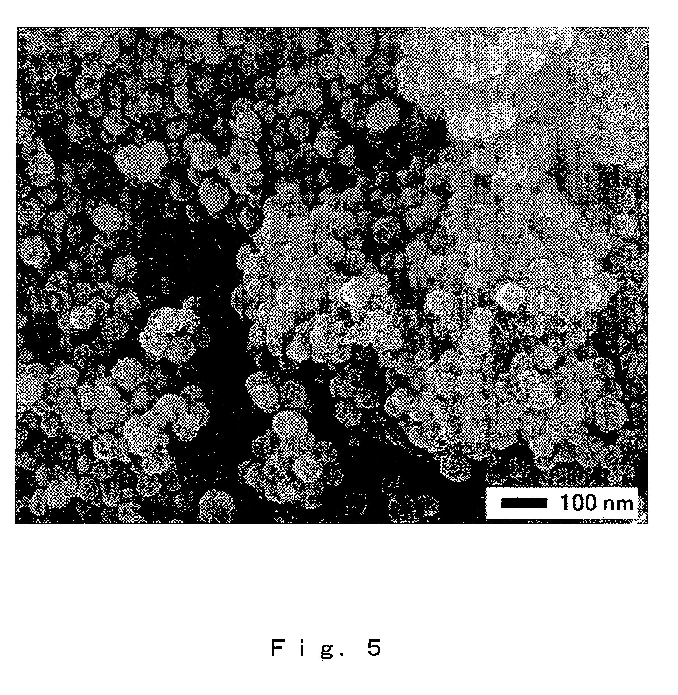

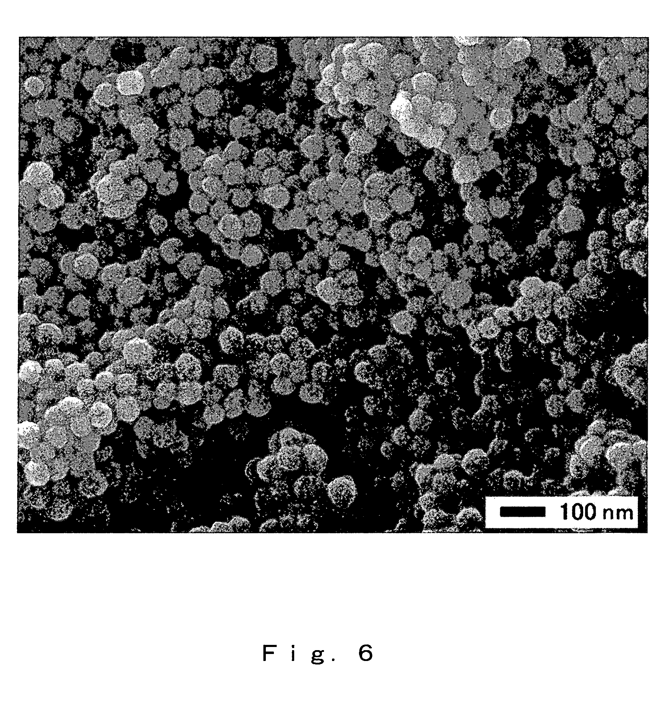

The products for samples 2-1 to 2-6 were all CeO₂. According to the SEM observations, the microparticle shape was an aggregate and nonuniform only in the case of sample 2-1, while all of the others were shown to be spherical (Figures 3 to 7). A fibrous feature was observed between particles in the SEM photograph of sample 2-6. The average particle diameters determined from the SEM photographs for the spherical samples are shown in Table 3.

The average particle diameter was shown to decline as the molecular weight increased for molecular weights (analytical value by GPC) up to 18,000. In contrast, the particle diameter increased when the molecular weight exceeded 18,000. The coefficient of variation was 0.15 or less for all of samples 2-2 to 2-6, which demonstrated a narrow particle diameter distribution, i.e., almost a monodisperse condition. It was thus shown that the average particle diameter of an almost monodisperse core/shell type cerium oxide microparticle could be freely varied by adjusting the molecular weight of the PVP.

Considering now the properties of the dispersion, the viscosity of the dispersions for samples 2-1 to 2-6 increased with increasing molecular weight. Excluding samples 2-1 and 2-6, the average particle diameter by DLS was in approximate agreement with the average particle diameter determined from the results of the SEM observations. Thus, it was also shown in Example 2 that spherical core/shell type cerium oxide microparticles were independently dispersed in the dispersion.

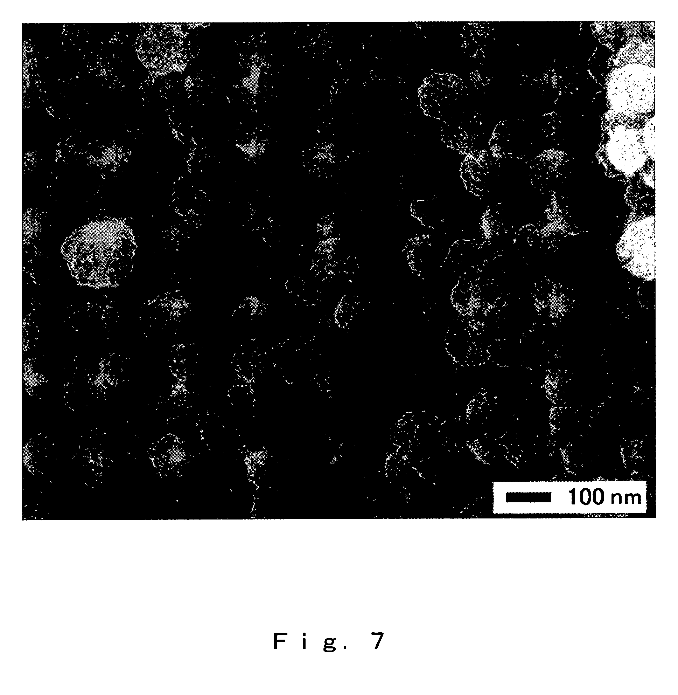

Sample 2-1 had a large average particle diameter. This agreed with the microparticle shape being an aggregate. In addition, sample 2-1 underwent rapid sedimentation and was not stable in its dispersion form. In the case of sample 2-6, the average particle diameter determined by DLS was larger than the average particle diameter obtained from the results of SEM observation. This is thought to be due to the presence of particle-to-particle bonding by the fibrous feature, as shown in Figure 7, which led to a large value for the average particle diameter.

**Table 2.**

| PVP (polyvinyl-pyrrolidone) | molecular weight | | manufacturer |
|---|---|---|---|
| | analytical value by GPC (as polyethylene glycol) | catalogue value | |
| A | 2420 | 3500 | Akros |
| B | 4350 | 10000 | Sigma-Aldrich |
| C | 4790 | 8000 | Akros |
| D | 13900 | 29000 | Sigma-Aldrich |
| E | 18000 | 55000 | Sigma-Aldrich |
| F | 302000 | 360000 | Wako Pure Chemical Industries, Ltd. |

**Table 3.**

| sample no. | PVP (see Table 2) | dispersion | | | | | powder | | | |
|---|---|---|---|---|---|---|---|---|---|---|
| | | viscosity | DLS method | | stability | | micro-particle shape by SEM observation | average particle diameter | coefficient of variation on the particle diameter | product |
| | | | average particle diameter | coefficient of variation on the particle diameter | without dilution | diluted 10X with EG | | | | |
| | | (mPa·s) | (nm) | | | | | (nm) | | |
| 2-1 Comp. Ex. | A | 58 | 1220 | 0.187 | × | × | aggregate | | | CeO₂ |
| 2-2 | B | 61.1 | 111.2 | 0.065 | ○ | ⊚ | spherical | 113.8 | 0.120 | CeO₂ |
| 2-3 | C | 61.8 | 85.8 | 0.122 | ○ | ⊚ | spherical | 84.3 | 0.146 | CeO₂ |
| 2-4 | D | 116.3 | 64.1 | 0.095 | △ | ⊚ | spherical | 57.7 | 0.140 | CeO₂ |
| 2-5 | E | 138.3 | 70.3 | 0.199 | △ | ⊚ | spherical | 56.1 | 0.149 | CeO₂ |
| 2-6 | F | 3943 | 168.5* | 0.044 | ○ | ⊚ | spherical | 100.4 | 0.150 | CeO₂ |

⊚ no sediment is seen after 1 month
○ small amounts of sediment are seen after 1 month
△ substantial sediment is seen after 1 month
× sediment is seen in approximately 2 or 3 days
* The measurement result for the undiluted dispersion could not be accurately determined due to the high viscosity. The data for the 10X dilution with ethylene glycol (EG) was therefore used.

### Example 3

A dispersion was prepared using the same method as for sample 2-2 in Example 2 and a dispersion medium replacement test was then run using the following procedure. The dispersion medium and dispersed material were separated by centrifugal separation; terpineol was added to the dispersed material after its separation; and dispersion was carried out using an ultrasound homogenizer. The dispersing time was 4 minutes, and the dispersion process was carried out while cooling. The average particle diameter was determined by DLS on the dispersion after dispersion medium replacement. The result is shown in Table 4. The particle diameter was approximately the same as for sample 2-2. Thus, it was confirmed that the core/shell type cerium oxide microparticles could also be dispersed in an aggregate-free manner when dispersion medium replacement was carried out. In addition, the dispersion exhibited an extremely good stability and separation did not occur even after standing for at least 10 days.

**Table 4.**

| sample no. | dispersion after replacement of the dispersion medium | | | |
|---|---|---|---|---|
| | viscosity | DLS method | | stability |
| | | average particle diameter | coefficient of variation | |
| | (mPa · s) | (nm) | | |
| 3-1 | 45 | 99 | 0.072 | excellent |

### Example 4

Characterization by Fourier-transform infrared spectrophotometry (FTIR), thermogravimetry (TG), and transmission electron microscopy (TEM) was carried out on the powder from sample 2-2 of Example 2 (powder provided by separation from the dispersion) and on a powder prepared using the same conditions as for sample 3-2 with regard to the cerium nitrate and PVP concentration, but using a different volume of ethylene glycol. According to the results of thermogravimetric analysis (TG), a weight loss of close to 15% was observed around 220°C. Thus, a weight loss was produced at a temperature higher than the boiling point of the dispersion medium (190°C). A weight loss of 22 weight% was obtained by heating the dry powder to 900°C. A different sample produced on a different day had a weight loss of 19 weight%, which demonstrated that this weight loss was approximately 19 to 22 weight%.

In addition, the results of Fourier-transform infrared spectrophotometry (FTIR) showed a peak other than the peak assigned to cerium oxide. Excess polymer unassociated with the cerium oxide microparticles had been removed because the dried powder was subjected to centrifugal separation and redispersion in water or ethanol three times. The dispersion medium had also been thoroughly eliminated due to the drying step. These considerations demonstrated that the non-cerium oxide absorption peak observed by Fourier-transform infrared spectrophotometry (FTIR) was caused by a species present on the surface of the cerium oxide microparticle; this was also shown to resemble the absorption of a polymer.

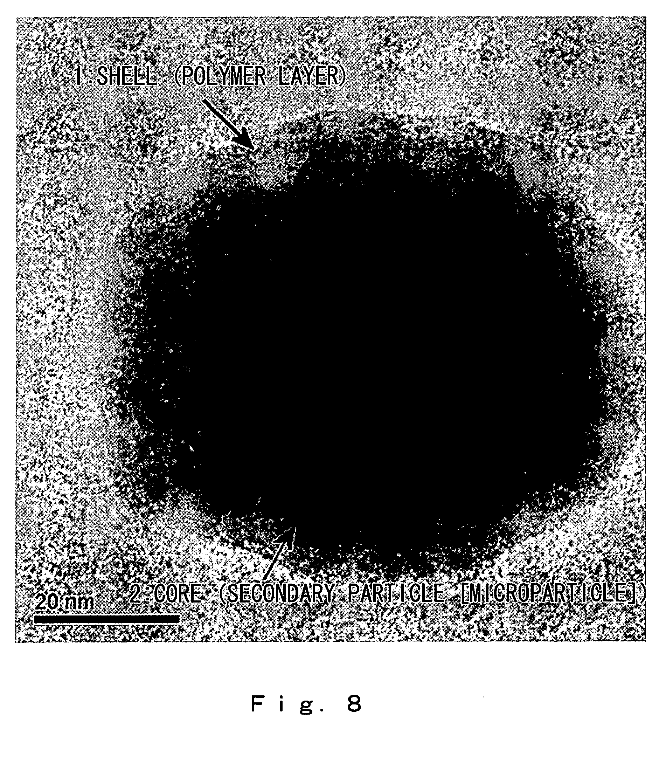

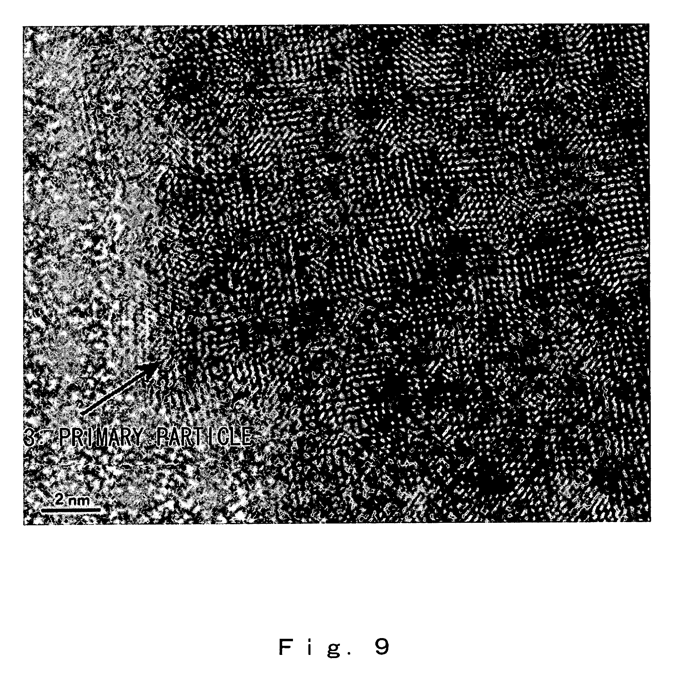

According to the results of the transmission electron microscopic (TEM) observations (Figures 8 and 9), what appears to be an approximately 5 nm layer of polymer was observed on the particle surface. The layer was also found to diminish during long-term transmission electron microscopic (TEM) observation, which suggested degradation by the electron beam. When the preceding observations were considered as a whole, it became clear that polymer was attached to the surface of the cerium oxide microparticles.

Using the Hall method, a value of approximately 3 nm was determined for the crystallite (primary particle) size from the full width at half maximum for the peak in the XRD pattern of the sample 2-2 powder. The results from the transmission electron microscopic (TEM) observation also gave a primary particle diameter of from 1 up to 2 nm. The secondary particle was also shown to be the aggregation of primary particles at high density without gaps among the primary particles.

### Example 5

Hydroxypropyl cellulose (HPC) (from Wako Pure Chemical Industries, Ltd., molecular weight: 15,000 to 30,000) and Ce(NO₃)₃ · 6H₂O (Kojundo Chemical Laboratory Co., Ltd.) were added to 30 cm³ EG (Wako Pure Chemical Industries, Ltd.) with stirring. The concentration of the added HPC was set at 120 kg/m³. The concentration of the Ce(NO₃)₃ · 6H₂O was set at 0.600 kmol/m³. The mixture was heated and then heated under reflux for 10 minutes at 190°C. A light brown gas was produced during heating under reflux, after which the solution assumed a white turbidity. A turbid white mixed solution (the dispersion) was obtained after heating/refluxing for the prescribed period of time. A portion of the turbid white solution was then subjected to centrifugal separation at 18,000 rpm in order to remove unreacted materials and the excess HPC and washing with water and ethanol was carried out. Drying at 80°C yielded a powder.

The product was confirmed to be cerium oxide by XRD. The microparticle shape was confirmed to be spherical by SEM observation of the powder. The average particle diameter was 90.1 nm, and the coefficient of variation in the average particle diameter was 0.223. The average particle diameter in the dispersion was 170.6 nm (coefficient of variation = 0.182), which was approximately 1.89 times the average particle diameter determined by SEM observation. The dispersion was also stable even after holding for two weeks. The preceding demonstrated that a stable dispersion is also obtained when synthesis is carried out using HPC in place of PVP, although the particle diameter in the dispersion is larger than for the use of PVP.

### Example 6

Polymer and zinc acetate (Zn(CH₃COO)₂ · 2H₂O, from Wako Pure Chemical Industries, Ltd.) were added to 30 cm³ diethylene glycol (DEG, Wako Pure Chemical Industries, Ltd.) with stirring. PVP was used for the polymer. The concentration of the added PVP was set at 120 kg/m³. The catalogue value for the average molecular weight of the PVP was 10,000 (Sigma Aldrich). The Zn(CH₃COO)₂ · 2H₂O concentration was set at 0.05 or 0.10 kmol/m³. The mixture was heated and was then heated under reflux for 20 minutes at 180°C.

In order to remove unreacted material and excess polymer, a portion of the turbid white solution was subjected to centrifugal separation at 18,000 rpm and washing was carried out with water and ethanol. After washing, drying at 80°C yielded a powder. The particle diameter distribution in the mixed solution (parent fluid) was examined by DLS immediately after heating under reflux. In addition, the dry powder was observed by SEM and the particle diameter distribution was examined using the photograph obtained as a result. Sample 6-1 was prepared using a Zn(CH₃COO)₂ · 2H₂O concentration of 0.10 kmol/m³ and sample 6-2 was prepared using a Zn(CH₃COO)₂ · 2H₂O concentration of 0.05 kmol/m³.

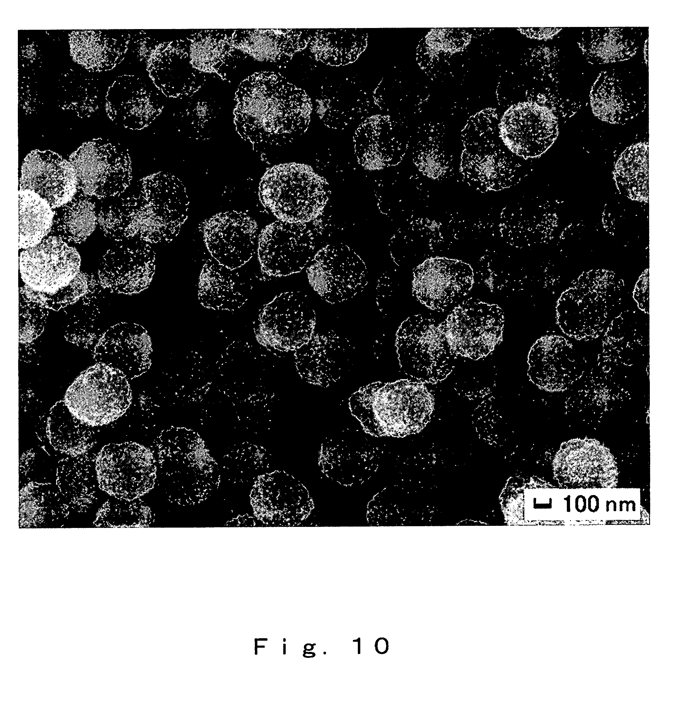

The results of the investigation of sample 6-1 were as follows. The results of XRD analysis of the dry powder confirmed that the microparticles were zinc oxide. The SEM photograph of the obtained zinc oxide microparticles is shown in Figure 10. Spherical particles with uniform particle diameters were obtained. The particle diameter determined from the SEM photograph was approximately 340 nm and was shown to be monodisperse with a coefficient of variation of 0.08. According to the IR results, the peak in the vicinity of 1650 cm⁻¹ characteristic of PVP was present.

The preceding indicated that a layer of PVP or a polymer related thereto was present on the particle surface. According to the TG results, the weight loss due to heating at 900°C was 6 weight%. Weight loss accompanied by the generation of heat occurred around 300°C. A crystallite size of 14 nm was determined from the peak width in the XRD pattern. In the case of sample 6-2, the particle diameter determined from the SEM photograph was in the range of 600 to 800 nm.

### Example 7

PVP (catalogue value for the average molecular weight = 10,000, from Sigma-Aldrich) and Ce(NO₃)₃ · 6H₂O (Kojundo Chemical Laboratory Co., Ltd.) were added to 30 cm³ EG (Wako Pure Chemical Industries, Ltd.) with stirring. The concentration of the added PVP was set at 120 kg/m³. The concentration of the Ce(NO₃)₃ · 6H₂O was set at 0.600 kmol/m³.

The mixture was heated and then heated under reflux; the heating/reflux temperature was varied from sample to sample. The experimental conditions are shown in Table 5. In the case of samples 7-1 to 7-5, the liquid was a turbid white liquid after heating under reflux, and for this reason the microparticles were separated from the dispersion by more or less the same method as in Example 1 and were characterized by SEM and XRD. In the case of samples 7-6 and 7-7, white turbidity was not present even after the heating under reflux. Sample 7-6 was subjected to drying at 150°C using a dryer or drying at 80°C using an evaporator; this was followed by characterization by SEM and XRD. The solvent was rapidly evaporated at 150°C and a dry material was obtained.

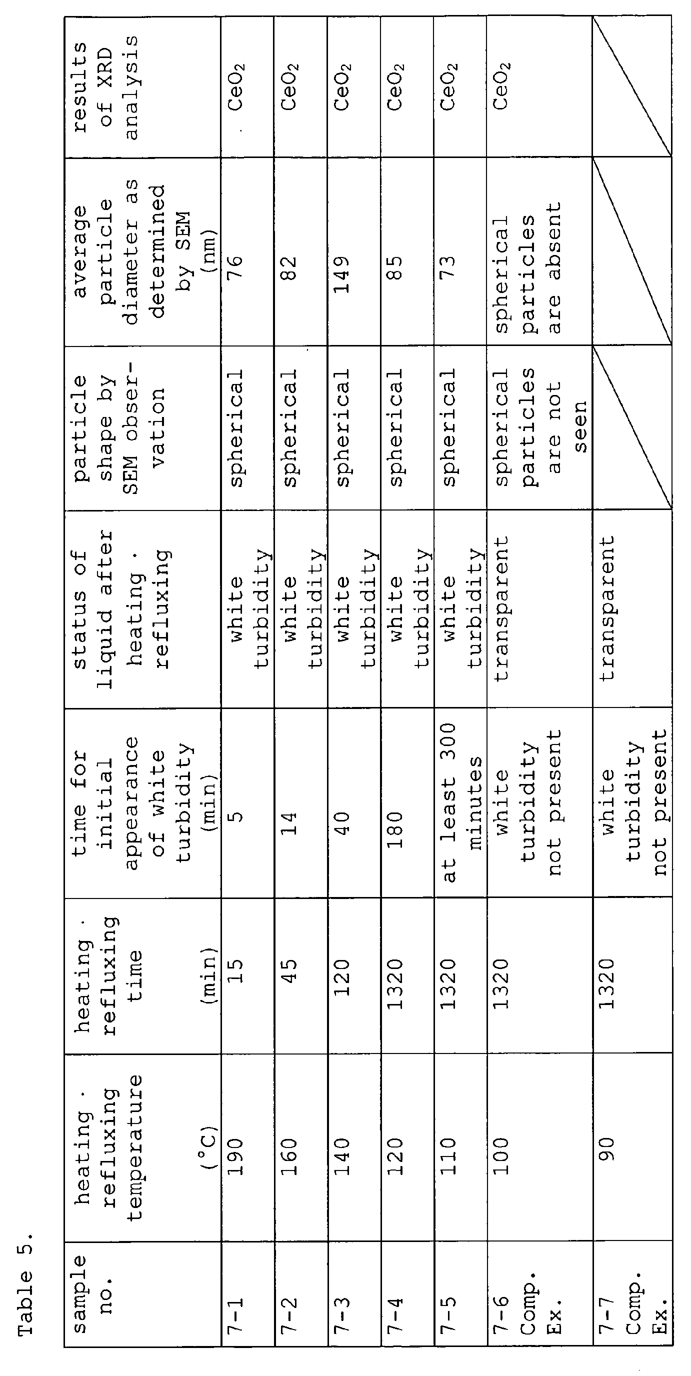

As may be understood from Table 5, the results for a heating/refluxing temperature of at least 110°C were clearly different from the results for a heating/refluxing temperature of 100 and below. According to Table 5, more time was required for the initial appearance of white turbidity as the heating/refluxing temperature declined from 190°C. In addition, more time was required at lower temperatures to produce strong turbidity. Spherical particles were observed at all heating/refluxing temperatures greater than or equal to 110°C, and it was shown that core/shell type microparticles were obtained at heating/refluxing temperatures greater than or equal to 110°C.

In contrast, white turbidity did not appear at temperatures of 100°C or less even when heating/refluxing was carried out for 22 hours. After heating under reflux, the solution (dispersion) had a transparent appearance and could not be said to exhibit white turbidity. The diffraction peaks for cerium oxide (CeO₂) were seen in the XRD pattern of the powder obtained by drying sample 7-6 at 150°C, and the diffraction peaks for cerium oxide (CeO₂) were also seen, although very weakly, in the XRD pattern of the powder obtained by drying at 80°C using an evaporator.

These results confirmed the presence of cerium oxide in the powders. Core/shell type particles were not seen in the SEM observation of the powder obtained by drying sample 7-6 at 150°C. Based on these results, the obtained powder is considered to be a composite composition of the oxide and polymer. The preceding demonstrated that core/shell type microparticles were not obtained when the heating/refluxing temperature was below 110°C. Or, when stated in the reverse manner, a temperature of at least 110°C was shown to be required in order to obtain core/shell type cerium oxide microparticles.

### Example 8

Sample 2-2 from Example 2 was redispersed in ethanol to obtain a redispersion, and an acicular crystalline sample (sample 8-1) was then obtained by heating this at 50°C to evaporate the ethanol. The results of observation with an optical microscope and by SEM demonstrated core/shell type cerium oxide microparticles in a three-dimensional aggregation.

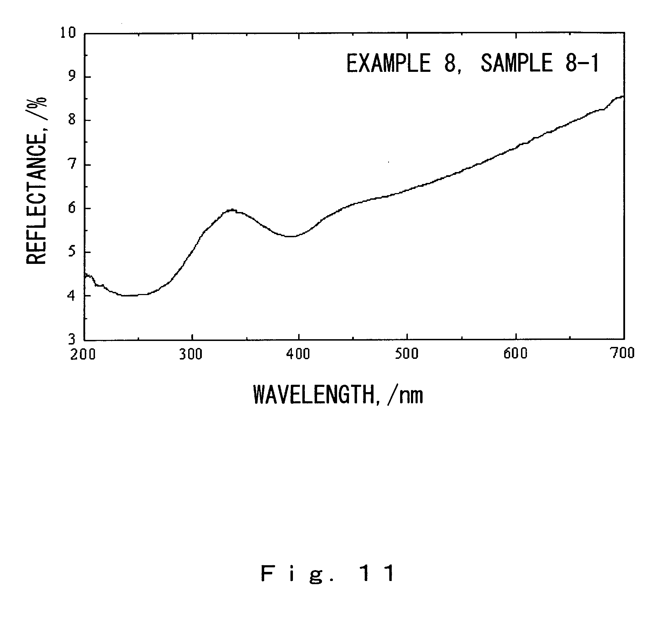

The results of measurement of the reflectance by sample 8-1 in the ultraviolet-visible region are shown in Figure 11; this measurement was performed with an ultraviolet-visible-near infrared microspectrophotometer. A peak occurs in the vicinity of 333 nm. This is thought to be a peak due to the periodic arrangement of the cerium oxide microparticles. This indicated a high likelihood that sample 8-1 was a photonic crystal.

### Example 9

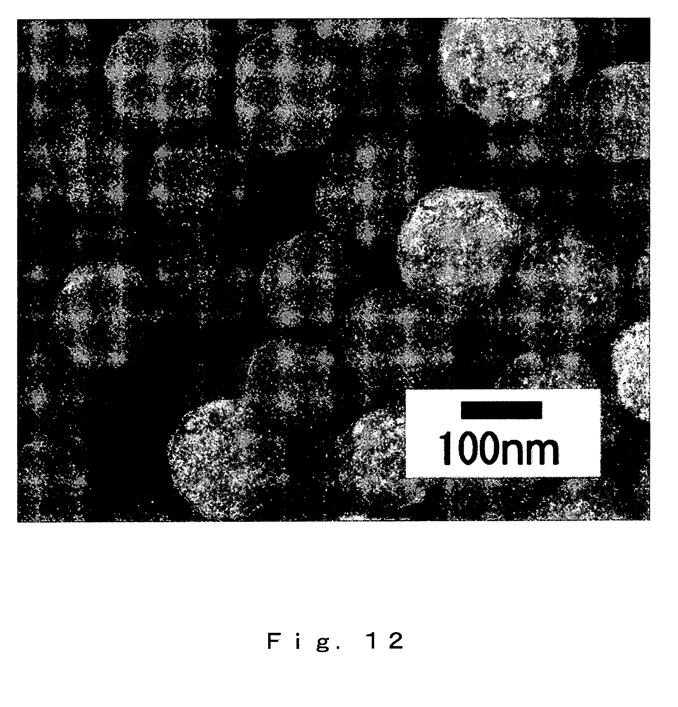

Sample 9-1 was prepared as follows: a powder was prepared by the same method as used to prepare sample 2-2 in Example 2, except for the heating/refluxing time; this powder was additionally subjected to a heat treatment in air for 5 hours at 500°C to give sample 9-1. The results of the SEM observation of sample 9-1 are shown in Figure 12. At this temperature the polymer layer undergoes an almost complete combustion and almost no polymer layer remains on the powder. As a consequence, the SEM image in Figure 12 is an SEM image of cerium oxide microparticles that no longer have a core-shell configuration, but rather are just the core. A spherical shape and an almost uniform size were demonstrated. In addition, even with the polymer layer gone, the primary particles were not disarranged after the heat treatment and the presence was demonstrated of secondary particles comprising a spherical aggregation of primary particles.

### INDUSTRIAL APPLICABILITY

As has been described above, the present invention relates to a process for producing a dispersion of fine core/shell type metal oxide particles and also relates to the dispersion thereby produced. The present invention can produce and provide a fine core/shell type metal oxide particle-containing dispersion that exhibits long-term stability and can produce and provide a powder therefrom. The fine core/shell type metal oxide particle-containing dispersion of the present invention can be applied to, for example, catalysts, photonic crystals, gas sensors, chemical-mechanical polishes, ultraviolet blocking agents, and connecting pastes. The present invention is useful for providing a novel process for producing a dispersion of fine core/shell type metal oxide particles, wherein this process enables the synthesis of a dispersion of fine core/shell type metal oxide particles that have a freely selected particle diameter achieved by adjusting the particle diameter of the metal oxide microparticles using the molecular weight of the polymer. The present invention is also useful for providing products of and from this dispersion.

## Claims

1. A process for producing a dispersion of fine core/shell type metal oxide particles, comprising the steps of:
mixing a metal salt and a polymer in a high-boiling organic solvent to obtain a mixture; and
heating this mixture under reflux at a temperature of at least 110°C to precipitate metal oxide,
wherein a layer of the polymer or a polymer related thereto is present on the surface of a secondary particle comprising a spherical aggregation of primary particles of the metal oxide.

2. The process for producing a dispersion of fine core/shell type metal oxide particles according to claim 1, wherein the coefficient of variation in particle diameter of the fine core/shell type metal oxide particles is less than 0.25.

3. A process for producing a dispersion of fine core/shell type metal oxide particles, comprising the steps of:
removing an unreacted ion and the polymer present in the solvent of a dispersion obtained by the production process according to claim 1 or 2; and
adding fresh solvent.

4. The process for producing a dispersion of fine core/shell type metal oxide particles according to any of claims 1 to 3, wherein the dispersion of fine core/shell type metal oxide particles has a stability whereby no sedimentation is observed even after standing for at least one day.

5. The process for producing a dispersion of fine core/shell type metal oxide particles according to any of claims 1 to 4, wherein the metal salt is a nitrate salt or an acetate salt.

6. The process for producing a dispersion of fine core/shell type metal oxide particles according to any of claims 1 to 5, wherein the particle diameter of the metal oxide particles is made smaller by increasing the molecular weight of the polymer.

7. The process for producing a dispersion of fine core/shell type metal oxide particles according to any of claims 1 to 6, wherein the concentration of the polymer (weight of polymer added per unit volume of the organic solvent) is from 80 kg/m³ to 120 kg/m³.

8. The process for producing a dispersion of fine core/shell type metal oxide particles according to any of claims 1 to 7, wherein the polymer is polyvinylpyrrolidone or hydroxypropyl cellulose and the layer of the polymer or the polymer related thereto is not separated by washing.

9. The process for producing a dispersion of fine core/shell type metal oxide particles according to any of claims 1 to 8, wherein the concentration of the metal salt is at least 0.05 kmol/m³.

10. The process for producing a dispersion of fine core/shell type metal oxide particles according to any of claims 1 to 9, wherein the high-boiling organic solvent is the polyol ethylene glycol or diethylene glycol.

11. The process for producing a dispersion of fine core/shell type metal oxide particles according to claim 5, wherein the nitrate salt or acetate salt is cerium nitrate or zinc acetate.

12. The production process according to any of claims 1 to 11, wherein the fine core/shell type metal oxide particles have a particle diameter of 30 nm to 1000 nm.

13. A dispersion of fine core/shell type metal oxide particles obtained by the production process according to any of claims 1 to 12, in which a polymer layer is present on the surface of a secondary particle comprising a spherical aggregation of primary particles of a metal oxide, wherein 1) the primary particles of the oxide are spherically aggregated, 2) a solid polymer layer is formed at the surface of the aggregated particle (secondary particle) by a crosslinking reaction, and 3) the fine core/shell type metal oxide particles are dispersed in a dispersion medium.

14. A fine core/shell type metal oxide particle powder comprising a highly dispersible dry powder obtained by drying the dispersion of fine core/shell type metal oxide particles according to claim 13.
